# FASCICULE DE BREVET EUROPEEN

(11) **EP 3 369 299 B1**
(45) Date de publication et mention de la délivrance du brevet: **05.02.2020**
(21) Numéro de dépôt: 18150148.7
(22) Date de dépôt: 03.01.2018
(51) Int. Cl.: A01D 34/86, B62D 61/08, B62D 49/00

(54) **ENGIN AGRICOLE PORTEUR AUTOMOTEUR POUR L'ENTRETIEN D'ACCOTEMENTS ET DE BORDURES DE VOIE DE CIRCULATION**
SELBSTFAHRENDE LANDWIRTSCHAFTLICHE MASCHINE MIT EIGENANTRIEB ZUR INSTANDHALTUNG VON BANKETTEN UND RÄNDERN VON FAHRBAHNEN
SELF-PROPELLED MULTI-PURPOSE AGRICULTURAL MACHINE FOR MAINTAINING ROAD SHOULDERS AND EDGES

(30) Priorité: 03.03.2017 FR 1751730
(43) Date de publication de la demande: 05.09.2018
(73) Titulaire: Dehondt, Guy, 76170 Auberville La Campagne (FR); Dehondt, Guillaume, 76170 Lillebonne (FR)
(72) Inventeur: Dehondt, Guy, 76170 Auberville La Campagne (FR); Dehondt, Guillaume, 76170 Lillebonne (FR)
(74) Mandataire: Cabinet Netter

(56) Documents cités:
- EP-A1- 2 617 278
- WO-A1-02/01937
- CN-A- 103 299 765
- DE-U1-202006 004 334
- FR-A1- 2 607 095
- FR-A1- 2 990 325
- US-A- 3 087 296

## Description

La présente invention concerne un véhicule porteur pour exécuter divers travaux d'entretien d'accotement et de bordures de voies de circulation, par exemple la tonte, l'aspiration, le ramassage, le débroussaillage, l'élagage, le déchiquetage ou encore le broyage de végétaux.

Il existe actuellement de nombreux véhicules de ce type utilisés en particulier par les collectivités locales ou les entreprises privées pour l'entretien des abords du réseau routier.

Cependant, ces solutions ne donnent pas entièrement satisfaction, en particulier car le conducteur a une mauvaise visibilité, le véhicule manque de polyvalence et comporte des dimensions encore trop importantes le rendant difficile à utiliser, transporter et/ou stocker.

Le document US 3 087 296 A divulgue un engin mobile pour couper les buissons, ronces et petits arbres et pour tondre l'herbe sur les bords d'une voie ferrée ou d'une autoroute.

Un but de la présente invention est donc de résoudre les problèmes cités précédemment, à l'aide d'une solution compacte et optimisée en termes d'efficacité.

Ainsi, la présente invention a pour objet un engin agricole porteur automoteur pour l'entretien d'accotements et de bordures de voie de circulation, comportant un châssis supportant au moins une cabine de pilotage, un moteur et au moins un outil équipement destiné à la tonte ou au broyage de végétaux, caractérisé en ce qu'il comporte, selon une direction de déplacement vers l'avant dudit engin, trois roues réparties en deux roues arrières montées sur un même essieu et une roue avant sensiblement alignée avec une des roues arrière.

Selon des modes de réalisation préférés, le véhicule conforme à la présente invention comprend l'une au moins des caractéristiques suivantes :
- la roue avant est alignée avec la roue arrière gauche selon la direction de déplacement vers l'avant dudit engin ;
- les trois roues sont motrices ;
- seule la roue avant est directrice ;
- la cabine de pilotage est placée au-dessus de l'essieu arrière, sensiblement entre les deux roues ;
- la cabine de pilotage est placée de manière décalée latéralement au-dessus de l'essieu arrière, au-dessus de l'une des deux roues arrière ;
- le véhicule comporte un bras supportant l'outil, ledit bras étant articulé au moins autour d'un axe vertical de rotation placé devant ladite cabine, à proximité de cette dernière ;
- le bras mobile peut pivoter sur un plan horizontal d'une position extrême à l'autre autour de l'axe de rotation selon une plage angulaire d'environ 90° ;
- le moteur est placé en position latérale par rapport à la cabine de pilotage, sensiblement entre la roue avant et la roue qui se trouve derrière elle ;
- l'engin agricole comporte, à l'arrière du châssis, derrière la cabine de pilotage, une prise de force et un relevage trois points normalisés pour attacher un outil tel qu'un broyeur, un aspirateur, une trémie de réception de végétaux broyés ou une trémie de vidange ; et
- l'engin agricole comporte, à l'avant du châssis, devant la cabine, une prise de force et un relevage trois points normalisés pour attacher un outil tel qu'un broyeur ou une déchiqueteuse à branches.

L'invention va maintenant être décrite plus en détail en référence à des modes de réalisation particuliers donnés à titre d'illustration uniquement et représentés sur les figures annexées dans lesquelles :
- La figure 1 est une vue en perspective avant d'un véhicule conforme à la présente invention ;
- La figure 2 est une vue en perspective arrière du véhicule de la figure 1 ;
- La figure 3 est une vue avant du véhicule conforme à la présente invention ;
- La figure 4 est une vue arrière du véhicule conforme à la présente invention ;
- La figure 5 est une vue de côté du véhicule conforme à la présente invention ;
- La figure 6 est une vue de dessus du véhicule conforme à la présente invention ;
- La figure 7 est une vue de dessus d'une variante de réalisation de la figure 1.

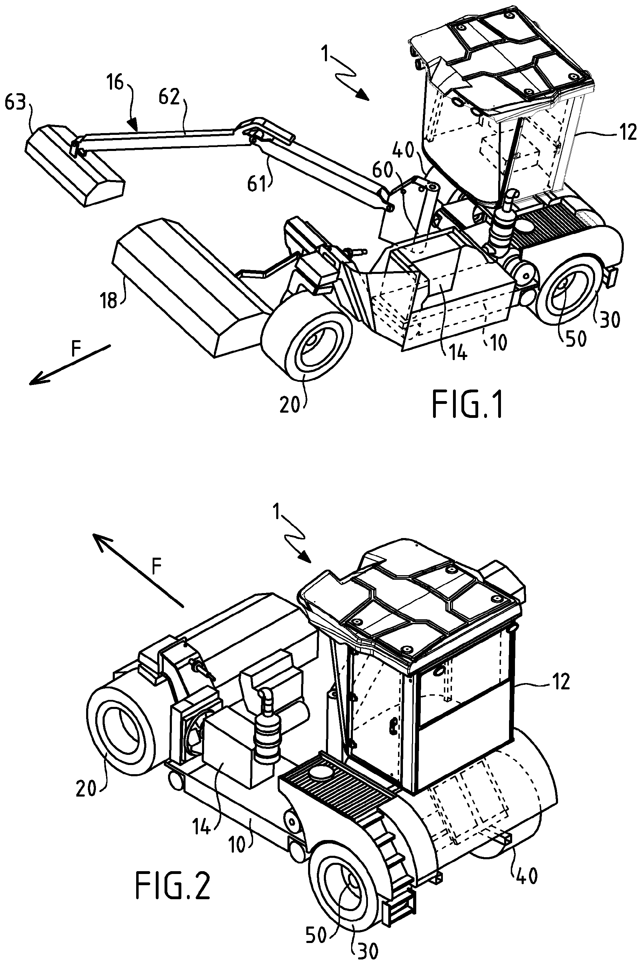

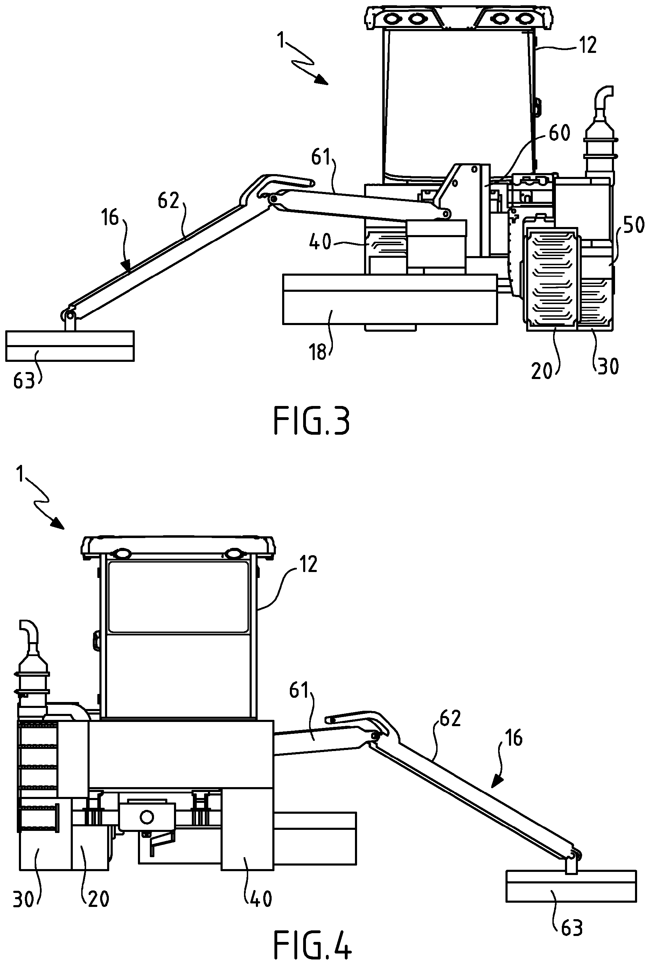

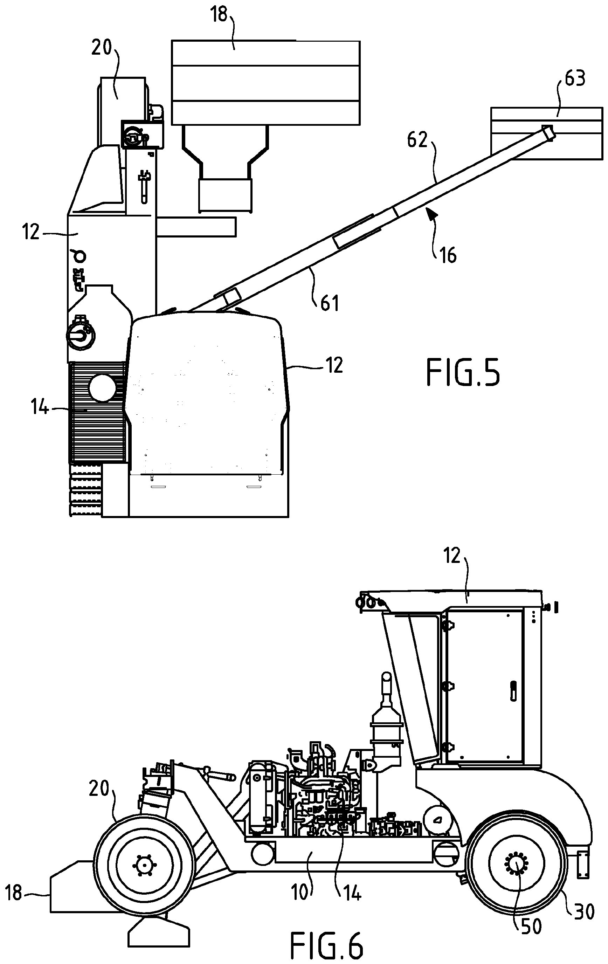

Comme cela est visible sur les figures 1 à 6, la présente invention se rapporte à un engin agricole porteur automoteur 1 pour l'entretien d'accotements et de bordures de voies de circulation par les collectivités locales ou des entreprises privées, par exemple de départementales, nationales ou autoroutes. Cet engin agricole 1 de type tracteur comporte un châssis mécano soudé libre 10 relativement bas supportant une cabine de pilotage 12, un moteur 14 un premier équipement destiné à la tonte ou au broyage de végétaux 16, par exemple une débroussailleuse latérale, et un second équipement destiné à la tonte ou au broyage de végétaux 18, par exemple un outil de coupe avant.

Le châssis 10 est également pourvu, selon la direction de déplacement vers l'avant de l'engin agricole 1 illustré par la flèche F, d'une roue avant 20 et deux roues arrière 30 et 40 permettant au véhicule de se déplacer, par exemple sur le bord d'une route.

Avantageusement, les deux roues arrière 30 et 40 sont reliées à un même essieu 50 et la roue avant 20 est sensiblement alignée avec une des deux roues arrière, plus précisément la roue arrière gauche 30 selon la direction de déplacement F de l'engin agricole 1.

Cette solution permet de réduire l'encombrement du véhicule de plus d'un mètre par rapport aux engins agricoles actuels, tout en pouvant rouler sur le bas-côté et supporter divers outils avec ou sans porte-à-faux latéral.

Comme cela est visible sur les figures 1 et 2, la roue avant 20 est la seule roue directrice tandis que l'ensemble des trois roues (avant et arrière) sont motrices.

La cabine de pilotage 12 est placée au-dessus de l'essieu arrière 50, sensiblement sur le côté droit, c'est-à-dire proche de la roue arrière droite 40, ce qui permet au chauffeur d'avoir une très bonne visibilité, notamment frontale et latérale, et de bien répartir les charges avant/arrière et droite/gauche sur le châssis 10. La position de conduite permet aussi d'éviter les troubles musculo-squelettiques car le chauffeur conserve en permanence une position de conduite droite. Enfin, du fait de la position de conduite améliorée, le chauffeur dispose d'une vue complète sur l'ensemble des outils placés à l'avant du véhicule. Il peut ainsi mieux contrôler leurs mouvements et optimiser son travail en termes d'efficacité et de durée.

A cet effet, l'engin agricole 1 comporte au moins un axe vertical de pivotement 60, visible notamment sur la figure 1, supportant un bras articulé en deux parties 61 et 62 placé à l'avant de la cabine 12, proche de cette dernière. Dans le cas présent, le bras supporte une tête de fauchage 63. Le bras 61 peut pivoter sur un plan horizontal d'une position extrême à l'autre autour de l'axe de rotation 60 selon une plage angulaire d'environ 90°, permettant un travail latéral sur une grande amplitude. Ainsi, dans une première position extrême, le bras 61 est sensiblement aligné avec la direction générale d'allongement de l'engin agricole 1 et, dans la seconde position extrême, le bras 61 est sensiblement perpendiculaire à ladite direction.

Pour une bonne répartition des charges, le moteur principal 14 est placé en position latérale par rapport à la cabine de pilotage 12, sensiblement entre la roue avant 20 et la roue arrière 30.

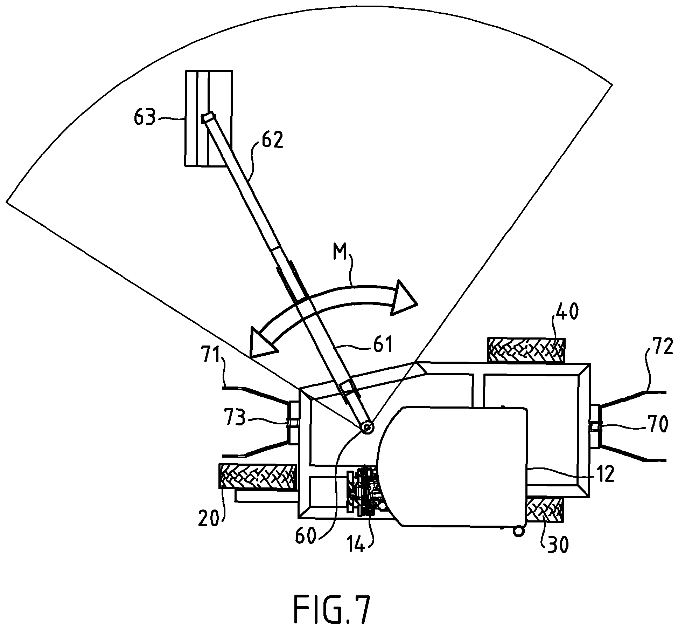

Selon un mode de réalisation illustré par la figure 7, la cabine de pilotage 12 de l'engin agricole 1 est disposée sur la gauche, c'est-à-dire du côté de la roue avant 20 et de la roue arrière gauche 30 avec laquelle elle est alignée. Cette solution améliore l'amplitude de mouvement (flèche M) de l'outil 16.

Le véhicule 1 comporte en outre à l'arrière du châssis 10, derrière la cabine de pilotage 12, une prise de force 70 et un relevage trois points normalisé 72 pour attacher un outil tel qu'un broyeur, un aspirateur, une trémie de réception de végétaux broyés ou une trémie de vidange.

De même, le véhicule 1 comporte, à l'avant du châssis 10, devant la cabine 12, une prise de force 73 et un relevage trois points normalisé 71 pour attacher un outil tel qu'un broyeur ou une déchiqueteuse à branches.

Il va de soi que la description détaillée de l'objet de l'Invention, donnée uniquement à titre d'illustration, ne constitue en aucune manière une limitation.

Ainsi, le débrousailleuse peut être remplacée par un outil de broyage, de coupe, d'aspiration ou de ramassage. Plusieurs outils peuvent être montés sur le châssis.

## Revendications

1. Engin agricole porteur automoteur (1) pour l'entretien d'accotements et de bordures de voie de circulation, comportant un châssis (10) supportant au moins une cabine de pilotage (12), un moteur (14) et au moins un outil équipement destiné à la tonte ou au broyage de végétaux (16 ; 18), **caractérisé en ce qu'**il comporte, selon une direction de déplacement (F) vers l'avant dudit engin (1), exclusivement trois roues (30 ; 40, 50) réparties en deux roues arrières (30, 40) montées sur un même essieu (50) et une unique roue avant (20) sensiblement alignée avec une des roues arrière (30 ; 40) .

2. Engin agricole (1) selon la revendication 1, **caractérisé en ce que** la roue avant (20) est alignée avec la roue arrière gauche (30) selon la direction de déplacement vers l'avant (F) dudit engin (1) .

3. Engin agricole (1) selon la revendication 1 ou 2, **caractérisé en ce que** les trois roues (20 ; 30, 40) sont motrices.

4. Engin agricole (1) selon l'une quelconque des revendications précédentes, **caractérisé en ce que** seule la roue (20) avant est directrice.

5. Engin agricole (1) selon l'une quelconque des revendications précédentes, **caractérisé en ce que** la cabine de pilotage (12) est placée au-dessus de l'essieu arrière (50), sensiblement entre les deux roues (30, 40).

6. Engin agricole (1) selon l'une quelconque des revendications 1 à 4, **caractérisé en ce que** la cabine de pilotage (12) est placée de manière décalée latéralement au-dessus de l'essieu arrière (50), au-dessus de l'une des deux roues arrière (30 ; 40).

7. Engin agricole (1) selon la revendication 5 ou 6, **caractérisé en ce qu'**il comporte un bras (61, 61) supportant l'outil (16), ledit bras étant articulé au moins autour d'un axe vertical de rotation (60) placé devant ladite cabine (12), à proximité de cette dernière.

8. Engin agricole (1) selon la revendication 7, **caractérisé en ce que** le bras mobile (61, 62) peut pivoter sur un plan horizontal d'une position extrême à l'autre autour de l'axe de rotation selon une plage angulaire (M) d'environ 90°.

9. Engin agricole (1) selon l'une quelconque des revendications précédentes, **caractérisé en ce que** le moteur (14) est placé en position latérale par rapport à la cabine de pilotage (12), sensiblement entre la roue avant (20) et la roue arrière (30) qui se trouve derrière elle.

10. Engin agricole (1) selon l'une quelconque des revendications précédentes, **caractérisé en ce qu'**il comporte, à l'arrière du châssis (10), derrière la cabine de pilotage (12), une prise de force (70) et un relevage trois points (72) normalisés pour attacher un outil tel qu'un broyeur, un aspirateur, une trémie de réception de végétaux broyés ou une trémie de vidange.

11. Engin agricole (1) selon l'une quelconque des revendications précédentes, **caractérisé en ce qu'**il comporte, à l'avant du châssis (10), devant la cabine (12), une prise de force (73) et un relevage trois points (71) normalisés pour attacher un outil tel qu'un broyeur ou une déchiqueteuse à branches.

## Patentansprüche

1. Selbstfahrende landwirtschaftliche Maschine mit Eigenantrieb (1) zur Instandhaltung von Banketten und Rändern von Fahrbahnen, ein Fahrgestell (10) umfassend, das mindestens eine Führerkabine (12), einen Motor (14) und mindestens ein Ausrüstungswerkzeug zum Mähen oder Häckseln von Pflanzen (16; 18) trägt, **dadurch gekennzeichnet, dass** sie in einer Fahrtrichtung (F) zur Vorderseite der Maschine (1) ausschließlich drei Räder (30; 40, 50) aufweist, die in zwei Hinterräder (30, 40), die auf derselben Achse (50) montiert sind, und ein einziges Vorderrad (20), das im Wesentlichen mit einem der Hinterräder (30; 40) ausgerichtet ist, unterteilt sind.

2. Landwirtschaftliche Maschine (1) nach Anspruch 1, **dadurch gekennzeichnet, dass** das Vorderrad (20) mit dem linken Hinterrad (30) in Vorwärtsfahrtrichtung (F) der Maschine (1) ausgerichtet ist.

3. Landwirtschaftliche Maschine (1) nach Anspruch 1 oder 2, **dadurch gekennzeichnet, dass** die drei Räder (20; 30, 40) angetrieben werden.

4. Landwirtschaftliche Maschine (1) nach einem der vorangehenden Ansprüche, **dadurch gekennzeichnet, dass** nur das Vorderrad (20) lenkbar ist.

5. Landwirtschaftliche Maschine (1) nach einem der vorangehenden Ansprüche, **dadurch gekennzeichnet, dass** die Führerkabine (12) über der Hinterachse (50), im Wesentlichen zwischen den beiden Rädern (30, 40) angeordnet ist.

6. Landwirtschaftliche Maschine (1) nach einem der Ansprüche 1 bis 4, **dadurch gekennzeichnet, dass** die Führerkabine (12) seitlich versetzt über der Hinterachse (50), über einem der beiden Hinterräder (30; 40) angeordnet ist.

7. Landwirtschaftliche Maschine (1) nach Anspruch 5 oder 6, **dadurch gekennzeichnet, dass** sie einen Arm (61, 61) umfasst, der das Werkzeug (16) trägt, wobei der Arm mindestens um eine vertikale Drehachse (60) schwenkbar ist, die vor der Kabine (12) in deren Nähe angeordnet ist.

8. Landwirtschaftliche Maschine (1) nach Anspruch 7, **dadurch gekennzeichnet, dass** der bewegliche Arm (61, 62) in einer horizontalen Ebene von einer Extremposition zur anderen um die Drehachse über einen Winkelbereich (M) von etwa 90° schwenkbar ist.

9. Landwirtschaftliche Maschine (1) nach einem der vorangehenden Ansprüche, **dadurch gekennzeichnet, dass** der Motor (14) in einer seitlichen Position in Bezug auf die Führerkabine (12), im Wesentlichen zwischen dem Vorderrad (20) und dem Hinterrad (30) hinter ihm, angeordnet ist.

10. Landwirtschaftliche Maschine (1) nach einem der vorangehenden Ansprüche, **dadurch gekennzeichnet, dass** sie an der Rückseite des Fahrgestells (10) hinter der Führerkabine (12) einen Zapfwellenantrieb (70) und eine standardmäßige Dreipunkt-Hebevorrichtung (72) zur Befestigung eines Arbeitsgeräts, wie beispielsweise eines Häckslers, eines Gebläses, eines Trichters zur Aufnahme von gehäckselten Pflanzen oder eines Auswurftrichters, aufweist.

11. Landwirtschaftliche Maschine (1) nach einem der vorangehenden Ansprüche, **dadurch gekennzeichnet, dass** sie an der Vorderseite des Fahrgestells (10), vorder Kabine (12), einen Zapfwellenantrieb (73) und eine standardmäßige Dreipunkt-Hebevorrichtung (71) zum Anbringen eines Arbeitsgeräts, wie beispielsweise eines Häckslers oder Astzerkleinerers, umfasst.

## Claims

1. Self-propelled carrier agricultural machine (1) for maintaining shoulders and edges of a road, comprising a chassis (10) supporting at least one driving cab (12), an engine (14) and at least one equipment tool for shearing or crushing plants (16; 18), **characterised in that** it comprises, in a direction of movement (F) towards the front of said machine (1), exclusively three wheels (30; 40, 50) divided into two rear wheels (30, 40) mounted on the same axle (50) and a single front wheel (20) substantially aligned with one of the rear wheels (30; 40).

2. Agricultural machine (1) according to claim 1, **characterised in that** the front wheel (20) is aligned with the left rear wheel (30) in the direction of movement (F) towards the front of said machine (1).

3. Agricultural machine (1) according to either claim 1 or claim 2, **characterised in that** the three wheels (20; 30, 40) are driving wheels.

4. Agricultural machine (1) according to any one of the preceding claims, **characterised in that** only the front wheel (20) is a steered wheel.

5. Agricultural machine (1) according to any one of the preceding claims, **characterised in that** the driving cab (12) is positioned above the rear axle (50), substantially between the two wheels (30, 40).

6. Agricultural machine (1) according to any one of claims 1 to 4, **characterised in that** the driving cab (12) is positioned so as to be laterally offset above the rear axle (50), above one of the two rear wheels (30; 40).

7. Agricultural machine (1) according to either claim 5 or claim 6, **characterised in that** it comprises an arm (61, 61) supporting the tool (16), said arm being articulated at least about a vertical rotary shaft (60) positioned in front of said cab (12), close to said cab.

8. Agricultural machine (1) according to claim 7, **characterised in that** the movable arm (61, 62) can pivot in a horizontal plane from one end position to the other about the rotary shaft within an angular range (M) of approximately 90°.

9. Agricultural machine (1) according to any one of the preceding claims, **characterised in that** the engine (14) is positioned in a lateral position with respect to the driving cab (12), substantially between the front wheel (20) and the rear wheel (30) behind said front wheel.

10. Agricultural machine (1) according to any one of the preceding claims, **characterised in that** it comprises, at the rear of the chassis (10), behind the driving cab (12), a standard PTO (70) and a standard three-point linkage (72) for attaching a tool such as a crusher, aspirator, crushed-plant receiving hopper or dump hopper.

11. Agricultural machine (1) according to any one of the preceding claims, **characterised in that** it comprises, at the front of the chassis (10), in front of the cab (12), a standard PTO (73) and a standard three-point linkage (71) for attaching a tool such as a crusher or wood chipper.
